# EUROPÄISCHE PATENTSCHRIFT

(11) **EP 3 329 120 B1**
(45) Veröffentlichungstag und Bekanntmachung des Hinweises auf die Patenterteilung: **16.10.2019**
(21) Anmeldenummer: 16747488.1
(22) Anmeldetag: 01.08.2016
(51) Int. Cl.: F03D 80/40

(54) **WINDENERGIEANLAGEN-ROTORBLATT**
WIND TURBINE ROTOR BLADE
PALE D'ÉOLIENNE

(30) Priorität: 31.07.2015 DE 102015112643
(43) Veröffentlichungstag der Anmeldung: 06.06.2018
(73) Patentinhaber: Wobben Properties GmbH, 26607 Aurich (DE)
(72) Erfinder: PAWIS, Torsten, 26624 Südbrookmerland (DE); STRICKMANN, Golo, 26607 Aurich (DE)
(74) Vertreter: Eisenführ Speiser
(86) Internationale Anmeldenummer: PCT/EP2016/068286
(87) Internationale Veröffentlichungsnummer: WO 2017/021350

(56) Entgegenhaltungen:
- DE-A1-102005 034 131
- DE-A1-102010 051 297
- DE-U1- 20 014 238

## Beschreibung

Die vorliegende Erfindung betrifft ein Windenergieanlagen-Rotorblatt sowie eine Windenergieanlage mit einem entsprechenden Rotorblatt.

Da die Rotorblätter einer Windenergieanlage ungeschützt allen Witterungsbedingungen ausgesetzt sind, kann es bei bestimmten Temperaturen zu einer Vereisung der Rotorblätter kommen. Um dies zu verhindern, kann eine Rotorblattheizung verwendet werden. Hierbei kann entweder eine Heizung außen am Rotorblatt vorgesehen werden oder erwärmte Luft kann innerhalb des Rotorblattes vorgesehen sein.

In der prioritätsbegründenden deutschen Patentanmeldung hat das Deutsche Patent- und Markenamt die folgenden Dokumente recherchiert: DE 200 14 238 U1, DE 10 2010 051 297 A1, DE 10 2011 086 603 A1, DE 10 2005 034 131 A1, DE 195 28 862 A1.

Es ist eine Aufgabe der vorliegenden Erfindung, ein Windenergieanlagen-Rotorblatt vorzusehen, welches eine verbesserte Beheizung des Rotorblattes ermöglicht.

Diese Aufgabe wird durch ein Windenergieanlagen-Rotorblatt nach Anspruch 1 gelöst.

Somit wird ein Windenergieanlagen-Rotorblatt mit einem Rotorblattwurzelbereich, einem Rotorblattspitzenbereich, einer Druckseite, einer Saugseite, mindestens einem Steg, welcher sich entlang einer Längsrichtung des Rotorblattes erstreckt und mindestens einer Umlenkeinheit zwischen einem Ende des mindestens einen Steges und dem Rotorblattspitzenbereich vorgesehen. Die mindestens eine Umlenkeinheit ist dazu ausgestaltet, eine sich entlang des mindestens einen Steges ausbreitende Luftströmung umzulenken, wobei mindestens ein Stegtropfen im Bereich des mindestens einen Steges angeordnet ist, um eine Verwirbelung der Luft beim Umlenken zu reduzieren.

Gemäß einem Aspekt der vorliegenden Erfindung ist eine erste Umlenkeinheit im Bereich eines Endes des ersten Steges vorgesehen.

Gemäß einem weiteren Aspekt der vorliegenden Erfindung ist eine zweite Umlenkeinheit zwischen der ersten Umlenkeinheit und der Rotorblattspitze vorgesehen.

Gemäß einem weiteren Aspekt der vorliegenden Erfindung weist die erste Umlenkeinheit ein erstes und zweites Ende auf und ist rund oder elliptisch ausgestaltet. Ein Ende des ersten oder zweiten Steges ragt über das erste und zweite Ende in die Umlenkeinheit hinein.

Gemäß einem weiteren Aspekt der vorliegenden Erfindung ist ein Stegtropfen an einem Ende des ersten oder zweiten Steges vorgesehen.

Gemäß einem weiteren Aspekt der vorliegenden Erfindung ist eine Umlenkeinheit im Bereich eines Endes des ersten Steges und eine zweite Umlenkeinheit zwischen dem Ende des zweiten Steges und der Rotorblattspitze vorgesehen.

Die Erfindung betrifft den Gedanken, im Inneren eines Windenergieanlagen-Rotorblattes im Bereich der Rotorblattspitze eine Umlenkeinheit im Bereich eines Endes eines Stegs des Rotorblattes und/oder eine Umlenkeinheit im Bereich der Rotorblattspitze vorzusehen. In dem Rotorblatt ist wenigstens ein Steg vorhanden, welcher sich von dem Bereich der Rotorblattwurzel in Richtung der Rotorblattspitze erstreckt, ohne dabei die Rotorblattspitze zu erreichen. Erwärmte Luft kann entlang des Steges in Richtung der Rotorblattspitze strömen und durch die Umlenkung wieder in Richtung Rotorblattwurzel gerichtet bzw. umgelenkt werden.

Gemäß einem Aspekt der vorliegenden Erfindung ist die Umlenkeinheit als ein Umlenkblech ausgestaltet. Durch eine runde oder abschnittsweise ellipsoide Führung kann ein Hauptteil der Luftströmung in eine gleichmäßige Konfiguration gebracht werden. Das Umlenkblech kann beispielsweise aus Schaum hergestellt werden. Alternativ bzw. zusätzlich dazu können Stegtropfen vorgesehen werden, wodurch ein zusätzliches Volumen zur Vermeidung starker Druckgradienten in Strömungsrichtung eingebracht werden kann.

Zusätzlich oder alternativ dazu kann eine Strömungszuführung vorgesehen sein. Dies kann beispielsweise durch Positionierung einer Trennwand bzw. der Stege erfolgen, so dass sich die Eingangsströmungen (die erwärmte Luft) bei der Strömungszusammenführung parallel und mit der gleichen Geschwindigkeit vereinen.

Zusätzlich oder alternativ dazu kann ein Umlenkelement vorgesehen werden, welches eine möglichst geringe Querschnittsflächenänderung aufweist.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische und abschnittsweise Darstellung eines Rotor-blattes der Windenergieanlage von Fig. 1,
- Fig. 3: zeigt einen Ausschnitt des Rotorblattes von Fig. 2,
- Fig. 4A-4C: zeigen verschiedene Darstellungen eines Stegtropfen gemäß der Erfindung, und
- Fig. 5: zeigt eine schematische und perspektivische Darstellung eines Ausschnitts eines Windenergieanlagen-Rotorblattes gemäß der Erfindung.

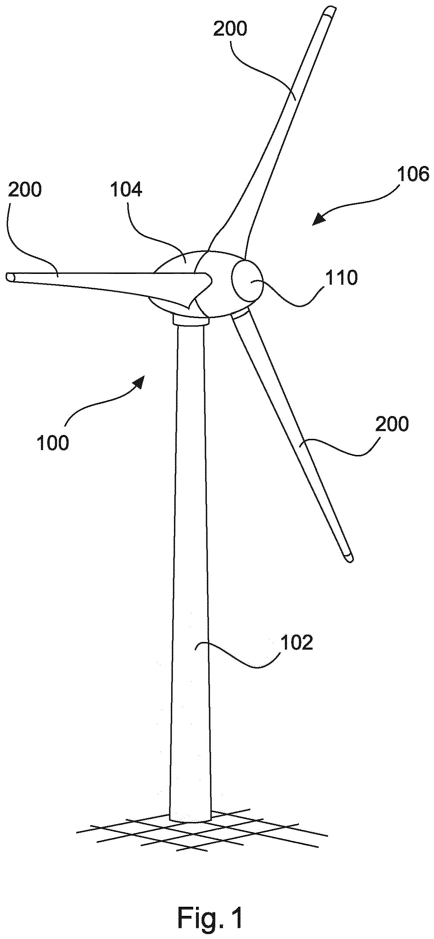

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

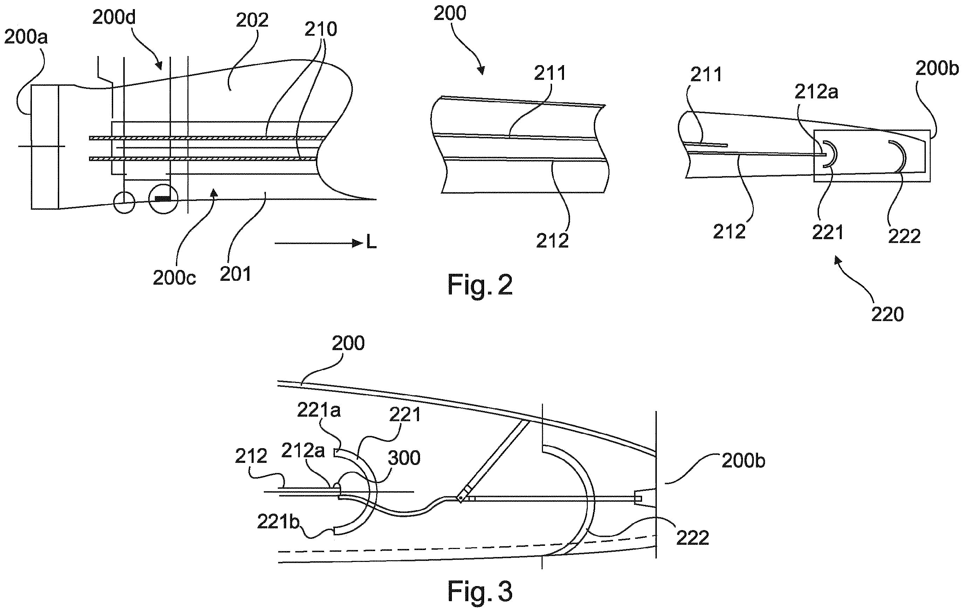

Fig. 2 zeigt eine schematische und abschnittsweise Darstellung eines Rotorblattes der Windenergieanlage von Fig. 1. Das Rotorblatt 200 weist einen Rotorblattwurzelbereich 200a, einen Rotorblattspitzenbereich 200b, eine Vorderkante 201, eine Hinterkante 202, eine Druckseite 200c und eine Saugseite 200d auf. Entlang einer Längsrichtung L des Rotorblattes 200 erstreckt sich innerhalb des Rotorblattes mindestens ein Steg 210. Beispielsweise können zwei Stege 211, 212 vorgesehen sein, welche zunächst parallel und im Bereich der Rotorblattspitze 200b aufeinander zulaufend ausgestaltet sein können. Hierbei kann die Länge des ersten Steges 211 geringer sein als die Länge des zweiten Steges 212. Im Bereich eines Endes 212a des zweiten Steges 212 kann eine erste Umlenkeinheit 221 vorgesehen sein. Eine zweite Umlenkeinheit 222 kann im Bereich der Spitze 200b des Rotorblattes vorgesehen sein.

Erwärmte Luft kann entlang der Stege in Richtung der Rotorblattspitze geführt und dann umgelenkt werden.

Fig. 3 zeigt einen Ausschnitt des Rotorblattes von Fig. 2. In Fig. 3 ist der Rotorblattspitzenbereich 200b des Rotorblattes 200 gezeigt. Insbesondere ist ein Ende 212a des Steges 212 sowie die erste und zweite Umlenkeinheit 221, 222 dargestellt.

Gemäß der Erfindung kann die erste Umlenkeinheit 221, die zweite Umlenkeinheit 222 oder beide Umlenkeinheiten 221, 222 vorgesehen sein.

Optional kann die erste Umlenkeinheit 221 rund oder ellipsenförmig ausgestaltet sein und kann zwei Enden 221a, 221b aufweisen, wobei das Ende 212a des Steges 212 über das erste und zweite Ende 221a, 221b in die Umlenkeinheit 221 hineinragt. Damit kann sichergestellt werden, dass die Luftströmung effektiv durch die erste Umlenkeinheit 221 umgelenkt wird. Hierbei kann insbesondere eine gleichmäßige Konfiguration des Hauptteils der Strömung erreicht werden.

Gemäß einem Aspekt der vorliegenden Erfindung können Stegtropfen 300 an dem Stegende vorgesehen sein.

Wie in Fig. 2 zu sehen, reduziert sich der Abstand zwischen dem ersten und zweiten Steg 211, 212 in Richtung der Rotorblattspitze 200b. Damit kann eine Strömungszusammenführung erreicht werden. Insbesondere können sich die Eingangsströmungen bei der Strömungszusammenführung parallel und mit der gleichen Geschwindigkeit vereinen.

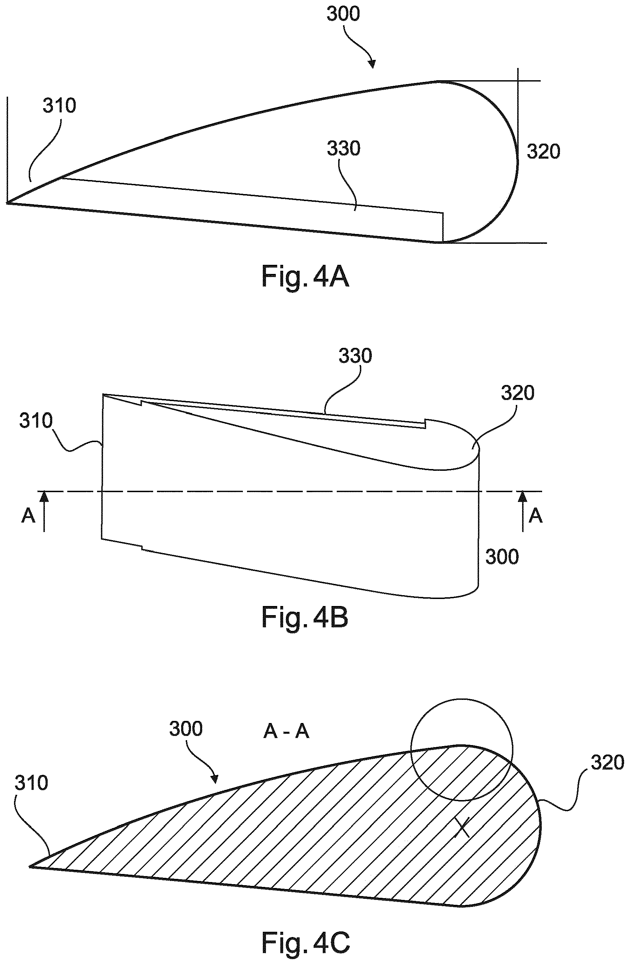

Fig. 4A-4C zeigen verschiedene Ansichten eines Stegtropfens gemäß der Erfindung. In Fig. 4A ist eine Draufsicht auf einen Stegtropfen 300, in Fig. 4B ist eine perspektivische Ansicht des Stegtropfens 300 und in Fig. 4C ist eine Schnittansicht entlang der Achse A-A von Fig. 4B gezeigt. Der Stegtropfen 300 wird wie in Fig. 3 gezeigt an einem Stegende vorgesehen bzw. aufgeklebt. Durch diesen Stegtropfen soll eine Umlenkung der erwärmten Luft im Bereich der Rotorblattnase sowie im Bereich des Rotorblatthinterkastens verbessert werden, Die erwärmte Luft wird umgelenkt und strömt z. B. in dem Bereich zwischen den Stegen zurück zu der Rotorblattwurzel.

Gemäß der Erfindung kann der Stegtropfen 300 seitlich an einem Stegende angeordnet sein.

Der Tropfen 300 weist ein erstes Ende 310, ein zweites Ende 320 sowie optional eine Ausnehmung 330 an den Seitenflächen des Tropfens auf. Das erste Ende 310 ist spitz ausgestaltet, während das zweite Ende 320 rund ausgestaltet ist.

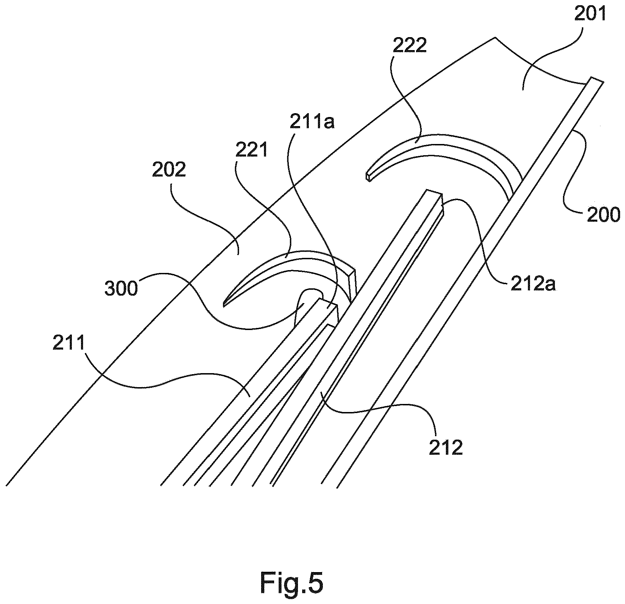

Fig. 5 zeigt eine schematische, perspektivische Darstellung eines Abschnitts eines Windenergieanlagen-Rotorblattes gemäß der Erfindung. Das Rotorblatt 200 weist einen ersten und zweiten Steg 211, 212, eine erste und zweite Umlenkeinheit 221, 222 sowie einen Stegtropfen 300 an einem Ende 211a des ersten Steges 211 auf. Die erste Umlenkeinheit 221 ist im Bereich des Endes 211 des ersten Steges 211 vorgesehen, während die zweite Umlenkeinheit 222 im Bereich des Endes 212a des zweiten Steges 212 vorgesehen ist. Gemäß der Erfindung ist der Stegtropfen 300 seitlich an dem ersten Steg 211 vorgesehen. Ein Stegtropfen 300 kann auch an dem Ende 212a des zweiten Steges 212 vorgesehen sein.

Der Stegtropfen 300 kann auch an anderen Stellen entlang der Stege (z. B. in der Mitte) vorgesehen sein. Die Umlenkeinheit kann z. B. aus Schaumstoff hergestellt sein und zwingt den Hauptteil der Luftströmung in eine gleichmäßige Konfiguration. Der Stegtropfen dient als zusätzliches Volumen zur Vermeidung starker Druckgardienten in Strömungsrichtung. Ferner dienen die Stegtropfen der Verrundung der Ecken.

## Patentansprüche

1. Windenergieanlagen-Rotorblatt (200), mit
einem Rotorblattwurzelbereich (200a),
einem Rotorblattspitzenbereich (200b),
einer Druckseite (200c),
einer Saugseite (200d),
einer Vorderkante (201),
einer Hinterkante (202)
mindestens einem Steg (210, 211, 212), welcher sich entlang einer Längsrichtung (L) des Rotorblattes (200) erstreckt,
mindestens einer Umlenkeinheit (221, 222) zwischen einem Ende des mindestens einen Steges (211, 212) und dem Rotorblattspitzenbereich (200b),
wobei die mindestens eine erste Umlenkeinheit (221, 222) dazu ausgestaltet ist, eine sich entlang des mindestens einen Steges (211, 212) ausbreitende Luftströmung umzulenken, **dadurch gekennzeichnet, dass**
mindestens ein Stegtropfen (300) im Bereich des mindestens einen Steges (210, 211, 212) angeordnet ist, um eine Verwirbelung der Luft beim Umlenken zu reduzieren.

2. Windenergieanlagen-Rotorblatt nach Anspruch 1, wobei
eine erste Umlenkeinheit (221) im Bereich eines Endes (212a) mindestens eines Steges (212) angeordnet ist.

3. Windenergieanlagen-Rotorblatt nach Anspruch 1 oder 2, wobei
eine zweite Umlenkeinheit (222) zwischen der ersten Umlenkeinheit (221) und der Rotorblattspitze (200b) vorgesehen ist.

4. Windenergieanlagen-Rotorblatt nach einem der Ansprüche 1 bis 3, wobei
die erste Umlenkeinheit (121) ein erstes und zweites Ende (121a, 121b) aufweist und rund oder elliptisch ausgestaltet ist,
wobei das Ende (212a) des Steges (212) über das erste und zweite Ende (221a, 221b) in die Umlenkeinheit (221, 222) hineinragt.

5. Windenergieanlagen-Rotorblatt nach einem der Ansprüche 1 bis 4, wobei
die erste Umlenkeinheit (221) im Bereich des Endes (211a) des ersten Steges (211) und die zweite Umlenkeinheit (222) zwischen dem Ende (212a) des zweiten Steges (212) und dem Rotorblattspitzenbereich (200b) vorgesehen ist.

6. Windenergieanlagen-Rotorblatt nach einem der Ansprüche 1 bis 5, wobei
der mindestens eine Stegtropfen (300) weist ein erstes Ende (310), ein zweites Ende (320) und eine Ausnehmung (330) an einer Seitenfläche des Tropfens (300) aufweist,
wobei das erste Ende (310) spitz ausgestaltet ist und das zweite Ende (320) rund ausgestaltet ist.

7. Windenergieanlagen-Rotorblatt nach Anspruch 6, wobei
die Ausnehmung (330) seitlich am Stegtropfen (300) vorgesehen ist und
wobei der Stegtropfen (300) seitlich an dem ersten Steg (211) vorgesehen ist, und/oder wobei der Stegtropfen seitlich an dem Ende (212a) des zweiten Stegs (212) vorgesehen ist.

8. Windenergieanlagen-Rotorblatt nach einem der Ansprüche 1 bis 6, wobei
der mindestens eine Stegtropfen (300) an einem Ende mindestens eines Steges (211, 212) angeordnet ist, wobei das Ende dem Rotorblattspitzenbereich (200b) zugewandt ist.

9. Verfahren zum Beheizen eines Windenergieanlagen-Rotorblattes (200), welches einen Rotorblattwurzelbereich (200a), einen Rotorblattspitzenbereich (200b), eine Druckseite (200c), eine Saugseite (200d), eine Vorderkante (201), eine Hinterkante (202), mindestens einen ersten und zweiten Steg (211, 212) aufweist, welcher sich entlang einer Längsrichtung des Rotorblattes (200) erstreckt und mindestens einem Stegtropfen (300), welcher im Bereich des mindestens einen Steges (210, 211, 212) angeordnet ist, um eine Verwirbelung der Luft beim Umlenken zu reduzieren, mit den Schritten:
Einleiten von erwärmter Luft entlang der Vorderkante (201) und/oder der Hinterkante (202)
Umlenken der entlang der Vorderkante (201) und/oder Hinterkante (202) entlangströmenden erwärmten Luft vorzugsweise in einen Bereich zwischen dem ersten und zweiten Steg (210, 211, 212).

## Claims

1. A wind turbine rotor blade (200) comprising
a rotor blade root region (200a),
a rotor blade tip region (200b),
a pressure side (200c),
a suction side (200d),
a leading edge (201),
a trailing edge (202),
at least one fin (210, 211, 212) which extends along a longitudinal direction (L) of the rotor blade (200),
at least one deflection unit (221, 222) between an end of the at least one fin (211, 212) and the rotor blade tip region (200b),
wherein the at least one first deflection unit (221, 222) is adapted to deflect an air flow which is propagated along the at least one fin (211, 212), **characterized by**
at least one fin drop-shaped portion (300) arranged in the region of the at least one fin (210, 211, 212) to reduce turbulence of the air upon deflection.

2. A wind turbine rotor blade according to claim 1 wherein
a first deflection unit (221) is arranged in the region of an end (212a) of at least one fin (212).

3. A wind turbine rotor blade according to claim 1 or claim 2 wherein
a second deflection unit (222) is provided between the first deflection unit (221) and the rotor blade tip (200b).

4. A wind turbine rotor blade according to one of claims 1 to 3 wherein
the first deflection unit (221) has a first and a second end (121a, 121b) and is of a round or elliptical configuration,
wherein the end (212a) of the fin (212) projects beyond the first and second end (221a, 221b) into the deflection unit (221, 222).

5. A wind turbine rotor blade according to one of claims 1 to 4 wherein
the first deflection unit (221) is provided in the region of the end (211a) of the first fin (211) and the second deflection unit (222) is provided between the end (212a) of the second fin (212) and the rotor blade tip region (200b).

6. A wind turbine rotor blade according to one of claims 1 to 5 wherein
the at least one fin drop-shaped portion (300) has a first end (310), a second end (320) and a recess (330) at a side surface of the drop-shaped portion (300),
wherein the first end (310) is of a pointed configuration and the second end (320) is of a round configuration.

7. A wind turbine rotor blade according to claim 6 wherein
the recess (330) is provided laterally on the fin drop-shaped portion (300), and
wherein the fin drop-shaped portion (300) is provided laterally on the first fin (211) and/or the fin drop-shaped portion is provided laterally at the end (212a) of the second fin (212).

8. A wind turbine rotor blade according to one of claims 1 to 6 wherein
the at least one fin drop-shaped portion (300) is arranged at an end of at least one fin (211, 212), wherein the end is towards the rotor blade tip region (200b).

9. A method of heating a wind turbine rotor blade (200) which has a rotor blade root region (200a), a rotor blade tip region (200b), a pressure side (200c), a suction side (200d), a leading edge (201), a trailing edge (202), at least a first and a second fin (211, 212) which extends along a longitudinal direction of the rotor blade (200), and at least one fin drop-shaped portion (300) arranged in the region of the at least one fin (210, 211, 212) to reduce turbulence in the air upon deflection, comprising the steps:
introducing warmed air along the leading edge (201) and/or the trailing edge (202), and
deflecting the warmed air which flows along the leading edge (201) and/or the trailing edge (202) preferably into a region between the first and second fins (210, 211, 212).

## Revendications

1. Pale de rotor d'éolienne (200), avec
une zone de racine de pale de rotor (200a),
une zone de pointe de pale de rotor (200b),
un côté pression (200c),
un côté aspiration (200d),
une arête avant (201),
une arête arrière (202)
au moins une traverse (210, 211, 212) qui s'étend le long d'un sens longitudinal (L) de la pale de rotor (200),
au moins une unité de déviation (221, 222) entre une extrémité de l'au moins une traverse (211, 212) et la zone de pointe de pale de rotor (200b),
dans laquelle l'au moins une première unité de déviation (221, 222) est configurée afin de dévier un écoulement d'air se répartissant le long de l'au moins une traverse (211, 212), **caractérisée en ce que**
au moins un goutte-à-goutte de traverse (300) est agencé dans la zone de l'au moins une traverse (210, 211, 212) afin de réduire un tourbillonnement de l'air lors de la déviation.

2. Pale de rotor d'éolienne selon la revendication 1, dans laquelle
une première unité de déviation (221) est agencée dans la zone d'une extrémité (212a) de l'au moins une traverse (212).

3. Pale de rotor d'éolienne selon la revendication 1 ou 2, dans laquelle
une seconde unité de déviation (222) est prévue entre la première unité de déviation (221) et la pointe de pale de rotor (200b).

4. Pale de rotor d'éolienne selon l'une quelconque des revendications 1 à 3, dans laquelle
la première unité de déviation (121) présente une première et seconde extrémité (121a, 121b) et est configurée de manière ronde ou elliptique,
dans laquelle l'extrémité (212a) de la traverse (212) s'avance par le biais de la première et seconde extrémité (221a, 221b) dans l'unité de déviation (221, 222).

5. Pale de rotor d'éolienne selon l'une quelconque des revendications 1 à 4, dans laquelle
la première unité de déviation (221) est prévue dans la zone de l'extrémité (211a) de la première traverse (211) et la seconde unité de déviation (222) entre l'extrémité (212a) de la seconde traverse (212) et la zone de pointe de pale de rotor (200b).

6. Pale de rotor d'éolienne selon l'une quelconque des revendications 1 à 5, dans laquelle
l'au moins un goutte-à-goutte de traverse (300) présente une première extrémité (310), une seconde extrémité (320) et un évidement (330) au niveau d'une surface latérale du goutte-à-goutte (300),
dans laquelle la première extrémité (310) est configurée en pointe et la seconde extrémité (320) est configurée de manière ronde.

7. Pale de rotor d'éolienne selon la revendication 6, dans laquelle
l'évidement (330) est prévu latéralement sur le goutte-à-goutte de traverse (300) et
dans laquelle le goutte-à-goutte de traverse (300) est prévu latéralement au niveau de la première traverse (211), et/ou dans laquelle le goutte-à-goutte de traverse est prévu latéralement au niveau de l'extrémité (212a) de la seconde traverse (212).

8. Pale de rotor d'éolienne selon l'une quelconque des revendications 1 à 6, dans laquelle
l'au moins un goutte-à-goutte de traverse (300) est agencé au niveau d'une extrémité d'au moins une traverse (211, 212), dans laquelle l'extrémité est tournée vers la zone de pointe de pale de rotor (200b).

9. Procédé de chauffage d'une pale de rotor d'éolienne (200) qui présente une zone de racine de pale de rotor (200a), une zone de pointe de pale de rotor (200b), un côté pression (200c), un côté aspiration (200d), une arête avant (201), une arête arrière (202), au moins une première et une seconde traverse (211, 212) qui s'étendent le long d'un sens longitudinal de la pale de rotor (200) et au moins un goutte-à-goutte de traverse (300) qui est agencé dans la zone de l'au moins une traverse (210, 211, 212) afin de réduire un tourbillonnement de l'air lors de la déviation, avec les étapes :
d'introduction d'air chauffé le long de l'arête avant (201) et/ou de l'arête arrière (202)
de déviation de l'air chauffé s'écoulant le long de l'arête avant (201) et/ou de l'arête arrière (202) de préférence dans une zone entre la première et seconde traverse (210, 211, 212).
